## Europäisches Patentamt

## European Patent Office

## Office européen des brevets

(19)

(11) Veröffentlichungsnummer: **0 041 129 B1**

(12) **EUROPÄISCHE PATENTSCHRIFT**

(45) Veröffentlichungstag der Patentschrift:
22.08.84

(21) Anmeldenummer: 81103250.7

(22) Anmeldetag: **30.04.81**

(51) Int. Cl.³: **C 04 B 21/02, C 04 B 33/02, C 04 B 33/13, C 03 C 11/00**

(54) **Verfahren zum Herstellen von porösen anorganischen Glasformkörpern.**

(30) Priorität: **16.05.80 DE 3018671**

(43) Veröffentlichungstag der Anmeldung:
**09.12.81 Patentblatt 81/49**

(45) Bekanntmachung des Hinweises auf die Patenterteilung:
**22.08.84 Patentblatt 84/34**

(84) Benannte Vertragsstaaten:
**AT BE CH DE FR GB IT LI LU NL SE**

(56) Entgegenhaltungen:
**AT - B - 328 951**
**CH - A - 499 470**
**DE - A - 2 124 058**

**Die Akte enthält technische Angaben, die nach dem Eingang der Anmeldung eingereicht wurden und die nicht in dieser Patentschrift enthalten sind.**

(73) Patentinhaber: **Dennert, Heinz, Trosdorfer Weg 6, D-8602 Bischberg (DE)**
Patentinhaber: **Dennert, Hans Veit, Mozartweg 1, D-8602 Schlüsselfeld (DE)**

(72) Erfinder: **Die Erfinder haben auf ihre Nennung verzichtet**

(74) Vertreter: **Tergau, Enno et al, Hefnersplatz 3 Postfach 11 93 47, D-8500 Nürnberg 11 (DE)**

**Beschreibung**

Die Erfindung betrifft ein Verfahren zum Herstellen von Schaumglas-Formkörpern nach dem Oberbegriff des Patentanspruches. Derartige Verfahren sind in der deutschen Patentanmeldung P 29 40 108.9-45 des gleichen Anmelders beschrieben. Das Verfahren führt zu billig herzustellenden spezifisch leichten und dennoch festen Schaumglas-Formkörpern, die meist in Form von Granulaten erzeugt werden. Zur Herstellung wird von natürlich vorkommenden mineralischen Verwitterungsprodukten, wie Lehmen, Tonen, Erden, Schlämmen, Schlicken, ausgegangen, die in grubenfeuchter oder nasser Form nach Zusatz von Glasbildnern und freiem Alkalihydroxid einem Nassaufschluss unterworfen werden. Als Glasbildner wird in der älteren Anmeldung Alkalisilikat in Form von handelsüblicher Wasserglaslösung vorgeschlagen. Die Mischung der Ausgangskomponenten wird so eingestellt, dass sie ein Feststoffgewichtsverhältnis V:(W+A)=1–6:1 aufweist. in dieser Formel bedeuten:

V      =      Verwitterungsprodukte
W      =      Wasserglas
A      =      Alkalihydroxid

Die Mischung der Ausgangskomponenten wird bei Temperaturen zwischen 40 und 100°C unter intensivem Rühren zur Reaktion gebracht. Das erhaltene Reaktionsprodukt liegt in Form einer dickflüssigen Schlempe vor und wird getrocknet, fein gemahlen und das Mahlprodukt mit Hilfe von Wasser oder Bindemitteln zu Granulaten verarbeitet, die bei Bedarf auch noch mit Trennmitteln umhüllt werden können. Die Granulate können bei ca. 200°C in an sich bekannter Weise vorgetrocknet und anschliessend zu porösen Schaumglas-Formkörpern bei Temperaturen oberhalb 700°C verschäumt werden. Die Schaumglas-Formkörper weisen ein Raumgewicht von unter 0,5 g/cm³ auf.

Schaumglas-Formkörper der oben beschriebenen Art dienen beispielsweise in Form von Schaumglasplatten als Aussenwand- Wärmedämmstoffe im Bauwesen. Wesentliche Bedeutung hat auch das Schaumglas-Granulat, das neben seiner Anwendung als lose oder gebundene Schüttung im Bauwesen auch noch andere Verwendungszwecke erfüllen kann, z.B. das Aufsaugen von Flüssigkeiten aller Art, das Abbrennen von Öl auf Wasser, als Füllstoff für andere Produkte und anderes mehr. Die lediglich als Beispiele hier erwähnten Anwendungsfälle lassen erkennen, dass es bei den erwähnten Produkten wesentlich darauf ankommt, dass diese billig und in grossen Mengen erzeugt werden können. Beim eingangs genannten älteren Verfahren bildet das einzusetzende Alkalisilikat in Form von Wasserglaslösung noch einen wesentlichen Kostenfaktor.

Der vorliegenden Erfindung liegt die Aufgabe zugrund, das Alkalisilikat beim durchzuführenden Nassaufschluss durch andere, billigere und ebenfalls in grossen Mengen zur Verfügung stehende Stoffe zu ersetzen. Zur Lösung dieser Aufgabe wird vorgeschlagen, dass der Nassaufschlussmischung fein gemahlenes Glas (G) zugesetzt und das Feststoffverhältnis auf Werte von (V+G):A=6...30:1 eingestellt wird.

Das beim älteren Verfahren erforderliche Wasserglas wird also völlig durch Galspulver ersetzt. Als Glaspulver kann Abfallglas, wie beispielsweise gebrauchte Flaschen, Glasscherben, Glausausschuss bei der Herstellung von Glasflaschen und ähnliches eingesetzt werden. Ausserdem hat sich überraschenderweise gezeigt, dass das Feststoffverhältnis wie oben angegeben stark zugunsten der eingesetzten Roh- und Altstoffe verschoben werden kann, so dass gleichzeitig eine wesentliche Einsparung an Alkalihydroxid erzielt werden kann.

Auch beim vorliegenden Verfahren werden vorzugsweise grubenfeuchte oder nasse natürlich vorkommende mineralische Verwitterungsprodukte eingesetzt. Es ist aber auch möglich, rückgefeuchtete Verwitterungsprodukte dem Verfahren zuzuführen, sofern bei der Rückfeuchtung für hinreichenden Wassergehalt gesorgt wird. Besonders günstige Ergebnisse lassen sich erzielen, wenn der Wassergehalt in der Aufschlussmischung auf 30 bis 80% eingestellt wird und z.B. 50% beträgt. Der Aufschluss kann unter diesen Umständen bei Temperaturen zwischen 40 und 100°C innerhalb einer Zeit von 10 bis 60 Minuten durchgeführt werden.

Als Treibmittel werden auch beim erfindungsgemässen Verfahren die üblichen Mittel eingesetzt. Verwitterungsprodukte, welche keine oder nur sehr geringe Mengen von organischen Bestandteilen enthalten, wird man meist mit organischen und sulfatischen Stoffen aufschäumen. Schlämme oder Schlicke dagegen, die von Natur aus mehr oder weniger grosse Mengen organischer Substanzen enthalten, werden lediglich mit sauerstoffabgebenden Stoffen, z.B. Rotschlamm, versetzt. Auch Kalziumkarbonat ist ein brauchbares Treibmittel, da es bei Temperaturen von etwa 825°C Kohlendioxid abspaletet.

Die Trocknung der aufgeschlossenen Masse kann nach allen bekannten Trocknungsverfahren durchgeführt werden. Mit Vorteil können auch neuere Verfahren eingesetzt werden, bei denen Trocknung und Granulierung, beispielsweise im Fliessbett in einem Verfahren zusammengefasst sind. Es kann aber auch sehr vorteilhaft nach wie vor auf dem Teller granuliert werden. Zur Verschäumung der Granalien bietet sich in bekannter Weise der Drehrohrofen an, aber auch Zirkulationsströmungsöfen, wie diese zum Stande der Technik gehören.

**Patentansprüche**

1. Verfahren zum Herstellen von Schaumglas-Formkörpern aus natürlich vorkommenden mineralischen Verwitterungsprodukten (V), wie Lehmen, Tonen, Erden, Schlämmen, Schlicken durch Nassaufschluss unter Zusatz von Glasbildnern, freiem Alkalihydroxid (A) und Treibmitteln, Trocknen des Reaktionsproduktes, Zerkleinern und Aufblähen bei Tamperaturen oberhalb 700°C, dadurch gekennzeichnet, dass der Nassaufschlussmischung feingemahlenes Glas (G) zugesetzt und das Feststoff-Verhältnis auf Werte von (V+G):A=6...30:1 eingestellt wird.

2. Verfahren nach Anspruch 1, dadurch gekennzeichnet, dass der Wassergehalt der Aufschluss-Mischung auf 30 bis 80% eingestellt wird.

3 Verfahren nach Anspruch 1 oder 2, dadurch gekennzeicnet, dass der Nassaufschluss bei Temperaturen von 40 bis 100°C während einer Zeit von 10 bis 60 Min. durchgeführt wird.

## Claims

1. Process for the production of shaped articles of foam glass from naturally occurring mineral weathering products (W), such as loams, clays, earths, muds, and silts, by wet fusion, with addition of glass formers, free alkali metal hydroxide (A) and glowing agents, drying of the reaction product, comminution and expansion at temperatures above 700°C, characterised in that finely ground glass (G) is added to the wet fusion mixture and the solids ratio is adjusted to values of (W+G):A=6...30:1.

2. Process according to claim 1, characterised in that the water content of the fusion mixture is adjusted to 30 to 80%.

3. Process according to claim 1 or 2, characterised in that the wet fusion is carried out at temperatures of 40 to 100°C over a period of 10 to 60 minutes.

## Revendications

1. Procédé de préparation de corps moulés en verre cellulaire à partir de produits de décomposition minéraux d'origine naturelle (V), tels que des limons, des argiles, des terres, des boues, des vases, par attaque au mouillé avec addition de matières premières pour formation de verre, d'un hydroxyde alcalin libre (A) et d'agents gonflants, séchage du produit de réaction, broyage et gonflement à des températures supérieures à 700°C, caractérisé en ceque l'on ajoute du verre finement broyé (G) au mélange d'attaque au mouillé et on règle le rapport des matières solides à des valeurs de (V+G):A=6...30:1.

2. Procédé selon la revendication 1, caractérisé en ce que l'on règle la teneur en humidité du mélange d'attaque à un niveau de 30 à 80%.

3. Procédé selon la revendication 1 ou 2, caractérisé en ce que l'attaque au mouillé est effectuée à des températures de 40 à 100°C en une durée de 10 à 60 min.